# EUROPEAN PATENT APPLICATION

(11) **EP 4 354 697 A1**
(43) Date of publication of application: **17.04.2024**
(21) Application number: 22200633.0
(22) Date of filing: 10.10.2022
(51) Int. Cl.: H02J 7/34, H02J 1/10, H02J 1/14, B60L 50/60, B65G 43/00, H02J 7/14

(54) **MODULE FOR AN INTRALOGISTICS TRANSPORT SYSTEM**

(71) Applicant: Murrelektronik GmbH, 71570 Oppenweiler (DE)
(72) Inventor: Gradischnig, Robert, 8472 Grassnitzberg (AT); Wolff, Ingo, 74613 Öhringen (DE); Hiltunen, Jani, 05400 Jokela (FI)
(74) Representative: Karzel, Philipp

(57) **Abstract**

The invention refers to a module (1) for recuperation of energy generated by a DC electric motor (31) deployed in an intralogistics transport system (30) with a voltage source (32) supplying the DC electric motor (31) with a source voltage in the range of 10 V up to 120 V, in particular of 10V up to 80V. The module (1) comprises a bidirectional DC/DC converter (2) for electrical connection to the DC electric motor (31) of the intralogistics transport system (30), an energy storage device (3) connected to the bidirectional DC/DC converter (2) and a control unit (4) for controlling the DC/DC converter (2). The control unit (4) is designed to allow charging of the energy storage device (3) via the DC/DC converter (2) when the DC electric motor (31) of the intralogistics transport system (30) is generating electrical energy. The control unit (4) is designed to allow energy supply to the intralogistics transport system (30) from the energy storage device (3) via the DC/DC converter (2) when the DC electric motor (31) consumes electrical energy from the voltage source (32). The module (1) is designed as a retrofit module for an intralogistics transport system (30).

## Description

The invention refers to a module for an intralogistics transport system.

Intralogistics describe the logistical flows of materials and goods that take place within a company premises. Often, roller conveyors and piece goods conveyors are used in intralogistics transport systems to move objects from one spot to another. DC electric motors are deployed to drive rollers or belts of such systems. For safety reasons these electric motors are driven by extra-low voltage (ELV), such as less than 120 V. When the moved objects need to be braked, the released kinetic or potential energy in existing intralogistics transport systems is released as heat trough a resistor. The current running through the resistor can rise to the short-circuit current of the motor, which is typically a multiple of the rated current of the motor.

The invention is based on the problem of being able to use existing transport systems in such a way that the development of heat during the braking of objects is avoided.

This problem is solved by a module having the features of claim 1.

The invention provides a module that is designed as a retrofit module for an intralogistics transport system. This allows the module to be subsequently installed into an existing intralogistics transport system. The heat development of an existing intralogistics transport system when braking an object can be reduced significantly by simply retrofitting the module into the existing, already completely installed intralogistics transport system.

The module serves for the recuperation of energy generated by a DC (direct current) electric motor deployed in the intralogistics transport system with a voltage source supplying the DC electric motor with a source voltage in the range of 10V up to 80V. Therefore, the energy released when breaking an object can be recuperated and does not need to be released in form of heat. Besides reducing or avoiding heat development the benefit hereby is that the kinetic and/or potential energy released by the braking object can be recuperated and can be used for driving the DC electric motor. In this way energy can be saved and energy costs can be reduced.

The module comprises a bidirectional DC/DC converter for electrical connection to the DC electric motor of the intralogistics transport system. In this way, the module can be easily connected to the intralogistics transport system.

The module comprises an energy storage device connected to the bidirectional DC/DC converter. Due to the energy storage device the energy released when braking an object transported by the intralogistics transport system does not need to be released in form of heat, but can be stored. In this way not only the development of heat during the braking of objects is avoided, but also energy can be saved and used for driving the DC motor at a later time.

The module comprises a control unit for controlling the DC/DC converter. The control unit is designed to allow charging of the energy storage device via the DC/DC converter when the DC electric motor of the intralogistics transport system is generating electrical energy. The control unit is designed to allow energy supply to the intralogistics transport system from the energy storage device via the DC/DC converter when the DC electric motor consumes electrical energy from the voltage source. In this way the control unit can easily control whether the energy storage device shall be charged by the DC electric motor or deliver electrical energy to the DC electric motor.

In particular, the module is formed separately from the intralogistics transport system into which it can be retrofitted.

Advantageously, the energy storage device is formed separately from the voltage source of the intralogistics transport system into which the module can be retrofitted. The retrofitting of a module to prevent heat generation in an existing system is thus possible in a simple way.

In an advantageous embodiment of the invention, the energy storage device is a capacitor. This allows the energy released during deceleration of the object to be stored in a simple way. Particularly the energy storage device is a high voltage capacitor or a super cap. It may also be provided that the energy storage device is a rechargeable battery.

In particular, the DC electric motor of the intralogistics system is used to drive a conveyor belt. In this way the objects can be moved easily by the conveyor belt.

The control unit is advantageously designed to receive an input signal. In particular, the control unit decides based on the input signal whether the DC electric motor is consuming or generating electrical energy. Purposeful, the control unit decides whether the DC electric motor is consuming or generating electrical energy by comparison of the input signal to a threshold value. Thereby the module can decide easily whether the DC electric motor is consuming or generating electrical energy.

In an advantageous further embodiment of the invention, the input signal is a voltage measured by the module in an electrical connection line between the voltage source of the intralogistics transport system and the DC electric motor of the intralogistics transport system. Therefore, the module could be connected to an electric connection line between the voltage source of the intralogistics transport system and the DC electric motor of the intralogistics transport system by simply one connection line of the module. This enables a very simple implementation of the module into the intralogistics transport system.

Preferably, the control unit decides that the DC electric motor is generating electrical energy if the voltage measured by the module in the electrical connection line exceeds the threshold value, wherein the threshold value is a voltage threshold value.

Advantageously, the control unit allows energy supply to the intralogistics transport system from the energy storage device via the DC/DC converter if the voltage measured by the module in the electrical connection line falls beyond the threshold value, wherein the threshold value is a voltage threshold value.

In particular, the input signal is an electrical current measured by the module in an electrical connection line between the voltage source of the intralogistics transport system and the DC electric motor of the intralogistics transport system.

In an advantageous embodiment of the invention the control unit decides that the DC electric motor is generating electrical energy if the current measured by the module in the electrical connection line flows in the direction from the DC electric motor of the intralogistics transport system to the voltage source of the intralogistics transport system

Preferably, the control unit decides that the DC electric motor is consuming electrical energy if the current measured by the module in the electrical connection line flows in the direction from the voltage source of the intralogistics transport system to the DC electric motor of the intralogistics transport system.

In particular, the control unit allows energy supply to the intralogistics transport system from the energy storage device via the DC/DC converter if the current measured by the module in the electrical connection line flows in the direction from the voltage source of the intralogistics transport system to the DC electric motor of the intralogistics transport system.

In an advantageous embodiment of the invention, the control unit decides that the DC electric motor is generating electrical energy if the current measured by the module in the electrical connection line equals the threshold value or is smaller than the threshold value, wherein the threshold value is a current threshold value.

Preferably, the current threshold value equals zero.

Advantageously, the module can be integrated into the intralogistics transport system. In particular, the module comprises an input terminal and an output terminal. Purposeful, the input terminal of the module is provided for connection with the voltage source of the intralogistics transport system. Purposeful, the output terminal is provided for connection with the DC electric motor of the intralogistics transport system. Therefore, the module can be connected in a save way to the intralogistics transport system via the input terminal and the output terminal.

Advantageously, the module comprises an electrical wire connecting the input terminal electrical with the output terminal such that the electrical wire can be part of the electrical connection between the voltage source of the intralogistics transport system and the DC electric motor of the intralogistics transport system.

In an advantageous embodiment of the invention, the module comprises a communication interface, particularly a bus system. Purposeful values such as energy stored in the energy storage device, current measured by the module in the electrical connection line, the voltage measured by the module in the electrical connection line, operational readiness status of the module or operational readiness status of the energy storage device can be read out via the communication interface. Thereby a good and simple control of these parameters is possible.

Embodiment of the invention are explained below with reference to the drawing. It show:
- Fig. 1: a schematic circuit diagram of a module connected to an intralogistics transport system via a stub line and
- Fig. 2: a schematic circuit diagram of a module connected to an intralogistics transport system via an input terminal and an output terminal.

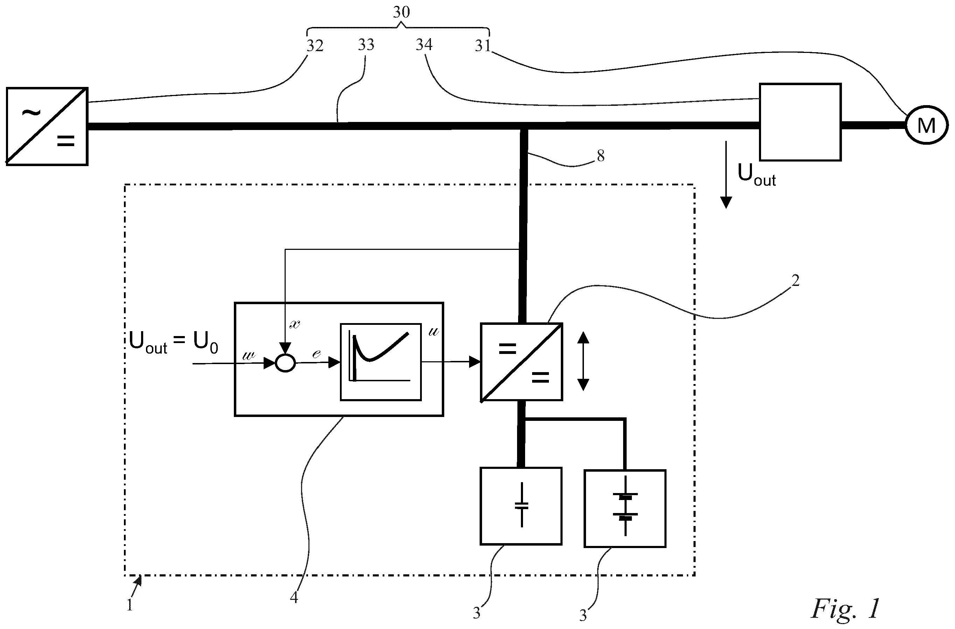

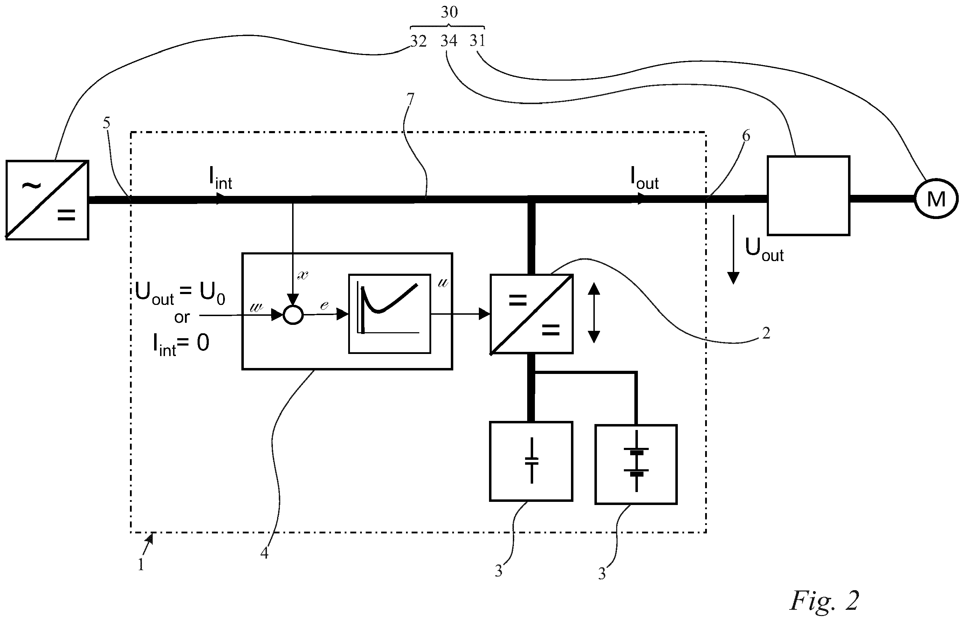

Figures 1 and 2 show different embodiments of a module 1. In the following firstly the features of the different modules 1 that the modules 1 have in common shall be described.

The module 1 is designed as a retrofit module for an intralogistics transport system 30. The module 1 is designed as an installation kit for installation into the existing intralogistics transport system 30. The module 1 is formed separately from the intralogistics transport system 30. The module 1 can be installed into the existing intralogistics transport system 30 in order to reduce or to avoid heat development of the intralogistics transport system 30. The module 1 can be retrofitted into the existing intralogistics transport system 30. The module 1 serves for recuperation of energy released by the intralogistics transport system 30.

The intralogistics transport system 30 serves for transportation of objects from one spot to another within a company premise. Such object can be materials and/or goods, for example. The intralogistics transport system 30 comprises a conveyor, not shown in the figures. The conveyor can be a roller conveyor, a good conveyor or a belt conveyor.

The conveyor is driven by a motor 31. The motor 31 is an electric motor. The motor 31 is supplied with electrical energy from a voltage source 32. The motor 31 is a DC (direct current) electric motor. The voltage source 32 is an extra-low-voltage (ELV) source. The voltage source 32 supplies the DC electric motor 31 with a source voltage. The source voltage is in a range from 10 V up to 120 V, in particular from 10 V up to 80 V, in particular from 24 V up to 72 V. It can be provided that the source voltage is maximum 72 V. It can be provided that the source voltage is maximum 24 V. It can be provided that the source voltage is minimum 24 V. In the embodiments the source voltage is 48 V.

The motor 31 and the voltage source 32 are part of the intralogistics transport system 30. The motor 31 is deployed in the intralogistics transport system 30. The motor 31 can drive a roller that directly contacts the object to be moved. It can be provided that the roller drives a belt. It can also be provided that the motor 31 drives a pulley that drives a belt. In the embodiments according to Fig. 1 and 2 the DC electric motor 31 of the intralogistics transport system 30 is used to drive a conveyor belt. In many situations the object moved by the conveyor needs to be braked or decelerated. This can be the case for example when the object is moved from a high to a low position (potential energy released) or when the object is braked on the level (kinetic energy released). The potential or kinetic energy released during these processes in the art can generate a braking current in the motor 31 and/or can be released as heat through a resistor. The braking current can exceed the rated current of the motor 31. Typically, the short-circuit current of the motor 31 is a multiple of the rated current of the motor. According to the invention, the heat generated by these processes can be reduced or avoided by the implementation of the module 1 into the intralogistics transport system 30. The module 1 can easily be retrofitted into the already installed intralogistics transport system 30.

The motor 31 of the intralogistics transport system 30 generates energy during the braking process of the moved object. The motor 31 of the intralogistics transport system 30 generates electrical energy during the braking process of the moved object.

In the embodiments the intralogistics transport system 30 comprises a motor control unit 34. The motor control unit 34 serves to control the DC electric motor 31.

The module 1 comprises a DC/DC converter 2. The DC/DC converter 2 is a bidirectional DC/DC converter. The DC/DC converter 2 is at one side connecter to the intralogistics transport system 30, in particular to the motor 31 of the intralogistics transport system 30.

The module 1 comprises an energy storage device 3. The DC/DC converter 2 is at the other side connected to the energy storage device 3. The energy storage device 3 serves for storing the energy released when braking the moved object. In particular the energy storage device 3 serves for storing the energy generated by the motor 31 of the intralogistics transport system 30. By storing the energy released when braking the moved object, a conversion of the released energy into heat can be reduced or avoided.

The energy storage device 3 is formed separately from the voltage source 32 of the intralogistics transport system 30 into which the module 1 can be retrofitted.

In the embodiments the energy storage device 3 is a capacitor, in particular a high voltage capacitor. Preferably, energy can be stored in the high voltage capacitor with some hundreds of volts, in particular 1 kV. But it can also be provided that the energy storage device is a super cap, an ultra cap or a rechargeable battery. Super or ultra caps have a huge capacity at a low voltage in a range form 2,5 V to 5 V. A battery can be installed permanently or exchangeable.

The module 1 comprises a control unit 4. The control unit 4 serves for controlling the DC/DC converter 2. The control unit 4 is designed to allow charging of the energy storage device 3 via the DC/DC converter 2 when the DC electric motor 31 of the intralogistics transport system 30 generates electrical energy. The control unit 4 is designed to allow energy supply to the intralogistics transport system 30 from the energy storage device 3 via the DC/DC converter 2 when the DC electric motor 31 consumes electrical energy from the voltage source 32 of the intralogistics transport system 30.

In particular, the control unit 4 is designed to allow energy supply to the intralogistics transport system 30 if an unusual high amount of energy is consumed by the intralogistics transport system 30, in particular by the DC electric motor 31. Preferably, the control unit 4 is designed to allow energy supply to the intralogistics transport system 30 if the DC electric motor 31 if the DC electric motor 31 is being started.

In the embodiments according to the Figures 1 and 2 the control unit 4 is designed to receive an input signal. The control unit 4 decides based on the input signal whether the DC electric motor 31 of the intralogistics transport system 30 is consuming or generating electrical energy. In particular, the control unit 4 decides whether the DC electric motor 31 of the intralogistics transport system 30 is consuming or generating electrical energy by comparison of the input signal to a threshold value. The threshold value is a predetermined value stored in the control unit 4.

In both embodiments the input signal can be a voltage measured by the module 1 in an electrical connection line between the voltage source 32 of the intralogistics transport system 30 and the DC electric motor 31 of the intralogistics transport system 30. In the embodiment according to Fig. 1 the input signal is a voltage measured by the module 1 in an electrical connection line between the voltage source 32 of the intralogistics transport system 30 and the DC electric motor 31 of the intralogistics transport system 30.

The electrical connection line between the voltage source 32 of the intralogistics transport system 30 and the DC electric motor 31 of the intralogistics transport system 30 can be entirely part of the intralogistics transport system 31, as shown in Fig. 1. In the embodiment according to Fig. 2 a part of electrical connection line between the voltage source 32 of the intralogistics transport system 30 and the DC electric motor 31 of the intralogistics transport system 30 is part of the module 1. This part is preferably an electric wire 7. The electric wire 7 is part of the module 1. It can also be provided that the part of the electrical connection line between the voltage source 32 of the intralogistics transport system 30 and the DC electric motor 31 of the intralogistics transport system 30 belonging to the module 1 is built by any other form of electrical connection.

In both embodiments it can be provided that the control unit 4 decides that the DC electric motor 31 is generating electrical energy if the voltage Uₒᵤₜ measured by the module 1 in the electrical connection line between the voltage source 32 of the intralogistics transport system 30 and the DC electric motor 31 of the intralogistics transport system 30 exceeds the threshold value. In both embodiments the threshold value can be a voltage threshold value U₀. In the embodiment according to Fig. 1 the threshold value is the voltage threshold value U₀. After deciding that the DC electric motor 31 is generating energy the control unit 4 controls the DC/DC converter 2 in such a way that an electrical current can flow through the DC/DC converter 2 in the direction from the DC electric motor 31 to the energy storage device 3. Electrical energy generated by the DC electric motor 31 is stored in the storage device 3 of the module 1. This energy is not dissipated in form of heat.

As shown in Fig. 1 a stump line 8 of the module 1 is electrically connected to the electrical connection line between the voltage source 32 of the intralogistics transport system 30 and the DC electric motor 31 of the intralogistics transport system 30. In the embodiment according to Fig. 1 the electrical connection line between the voltage source 32 of the intralogistics transport system 30 and the DC electric motor 31 of the intralogistics transport system 30 is built by an electrical wire 33 of the intralogistics transport system 30. The electrical connection line between the voltage source 32 of the intralogistics transport system 30 and the DC electric motor 31 of the intralogistics transport system 30 is entirely part of the intralogistics transport system 30.

When installing the module 1, the electrical connection of the stump line 8 to the electrical connection line between the voltage source 32 of the intralogistics transport system 30 and the DC electric motor 31 of the intralogistics transport system 30 is the only thing that needs to be done. In this way, the module 1 can be installed quickly and easily. The stump line 8 of the module 1 connects the DC/DC converter 2 of the module 1 with the electrical connection line between the voltage source 32 of the intralogistics transport system 30 and the DC electric motor 31 of the intralogistics transport system 30. A part of the stump line 8 connects the control unit 4 with the electrical connection line between the voltage source 32 of the intralogistics transport system 30 and the DC electric motor 31 of the intralogistics transport system 30. In this way, the control unit 4 can measure the voltage Uₒᵤₜ of the electrical connection line between the voltage source 32 of the intralogistics transport system 30 and the DC electric motor 31 of the intralogistics transport system 30 against ground.

In both embodiments the module 1 is designed in such a way that the control unit 4 allows energy supply to the intralogistics transport system 30, in particular to the motor 31, from the energy storage device 3 via the DC/DC converter 2 if the signal value falls beyond the threshold value. In the embodiment according to Fig. 1 the module 1 is designed in such a way that the control unit 4 allows energy supply to the intralogistics transport system 30, in particular to the motor 31, from the energy storage device 3 via the DC/DC converter 2 if the voltage Uₒᵤₜ measured by the module 1 in the electrical connection line between the voltage source 32 of the intralogistics transport system 30 and the DC electric motor 31 of the intralogistics transport system 30 falls beyond the threshold value, wherein the threshold value is a voltage threshold value Uo.

After deciding that the DC electric motor 31 is consuming energy the control unit 4 controls the DC/DC converter 2 in such a way that an electrical current can flow through the DC/DC converter 2 in the direction from the energy storage device 3 to the DC electric motor 31. Electrical energy stored in the storage device 3 of the module 1 is provided to the intralogistics transport system 30, in particular to the DC electric motor 31.

In the embodiment according to Fig. 2 the input signal received by the control unit 4 of the module 1 to decide whether the DC electric motor 31 of the intralogistics transport system 30 is consuming or generating electrical energy is an electrical current lint measured in the electrical connection line between the voltage source 32 of the intralogistics transport system 30 and the DC electric motor 31 of the intralogistics transport system 30.

In the embodiment shown in Fig. 2, the module 1 comprises an input terminal 5 and an output terminal 6. The input terminal 5 and the output terminal 6 are electrically connected, in the embodiment by the electrical wire 7. The input terminal 5 of the module 1 is electrically connected to the voltage source 32 of the intralogistics transport system 30. The output terminal 6 is electrically connected to the DC electric motor 31 of the intralogistics transport system 30. The voltage source 32, the module 1 and the DC electric motor 31 are electrically connected in series.

In both embodiments the module 1 is a plug-and-play module that can be retrofitted into an existing intralogistics transport system 30.

In the embodiment according to Fig. 2 the module 1 is designed in such a way that the control unit 4 decides that the DC electric motor 31 is generating electrical energy if the current lint measured by the module 1 in the electrical connection line between the voltage source 32 of the intralogistics transport system 30 and the DC electric motor 31 flows in the direction from the DC electric motor 31 to the voltage source 32.

The control unit 4 of the module 1 decides that the DC electric motor 31 of the intralogistics transport system 30 is generating electrical energy if the current lint measured by the module 1 in the electrical connection line between the voltage source 32 of the intralogistics transport system 30 and the DC electric motor 31 of the intralogistics transport system 30 equals a threshold value or is smaller than the threshold value, wherein the threshold value is a current threshold value I₀. In the embodiment according to Fig. 2 the current threshold value I₀ equals zero.

After deciding that the DC electric motor 31 is generating energy the control unit 4 controls the DC/DC converter 2 in such a way that an electrical current can flow through the DC/DC converter 2 in the direction from the DC electric motor 31 to the energy storage device 3. Electrical energy generated by the DC electric motor 31 is stored in the storage device 3 of the module 1. This energy is not dissipated in form of heat.

In the embodiment according to Fig. 2 the module 1 is designed in such a way that the control unit 4 decides that the DC electric motor 31 is consuming electrical energy if the current lint measured by the module 1 in the electrical connection line between the voltage source 32 of the intralogistics transport system 30 and the DC electric motor 31 flows in the direction from the voltage source 32 to the DC electric motor 31.

The control unit 4 of the module 1 decides that the DC electric motor 31 of the intralogistics transport system 30 is consuming electrical energy if the current lint measured by the module 1 in the electrical connection line between the voltage source 32 of the intralogistics transport system 30 and the DC electric motor 31 of the intralogistics transport system 30 is greater than the threshold value, wherein the threshold value is the current threshold value I₀ and equals zero. It can be provided that the threshold value I₀ is different from zero. Thereby it can be achieved that the energy storage device 3 first supplies electrical energy to the intralogistics transport system 30 if a higher amount of energy is needed. For instance when the DC electric motor 31 is started.

After deciding that the DC electric motor 31 is consuming energy the control unit 4 controls the DC/DC converter 2 in such a way that an electrical current can flow through the DC/DC converter 2 in the direction from the energy storage device 3 to the DC electric motor 31. Electrical energy stored in the storage device 3 of the module 1 is provided to the intralogistics transport system 30, in particular to the DC electric motor 31.

It can be provided that the control unit 4 in both embodiments is designed in such a way that it controls the DC/DC converter 2 to prevent supply of energy from the energy storage device 3 when the intralogistics transport system 30 is not supplied with energy from the voltage source 32, in particular when the intralogistics transport system 30 is switched off.

The module 1 comprises in both embodiments a communication interface not shown in the figures. The communication interface is a bus system. The bus system can be an IO (Input/Output)-Link, an ethernet or a classic fieldbus. The fieldbus can be ProfNet, EtherNet/IP or EtherCat. Values such as energy stored in the energy storage device 3, current lint measured by the module 1 in the electrical connection line, the voltage Uₒᵤₜ measured by the module 1 in the electrical connection line between the voltage source 32 of the intralogistics transport system 30 and the DC electric motor 31 of the intralogistics transport system 30, operational readiness status of the module 1 or operational readiness status of the energy storage device 3 can be read out via the communication interface. These values can be shown on a display of the module 1.

## Claims

1. Module for recuperation of energy generated by a DC electric motor (31) deployed in an intralogistics transport system (30) with a voltage source (32) supplying the DC electric motor (31) with a source voltage in the range of 10 V up to 120 V, in particular of 10 V up to 80 V,
the module (1) comprising:
- a bidirectional DC/DC converter (2) for electrical connection to the DC electric motor (31) of the intralogistics transport system (30),
- an energy storage device (3) connected to the bidirectional DC/DC converter (2) and
- a control unit (4) for controlling the DC/DC converter (2),
wherein the control unit (4) is designed to allow charging of the energy storage device (3) via the DC/DC converter (2) when the DC electric motor (31) of the intralogistics transport system (30) is generating electrical energy, wherein the control unit (4) is designed to allow energy supply to the intralogistics transport system (30) from the energy storage device (3) via the DC/DC converter (2) when the DC electric motor (31) consumes electrical energy from the voltage source (32), and wherein the module (1) is designed as a retrofit module for an intralogistics transport system (30).

2. Module according to claim 1,
**characterized in that** the module (1) is formed separately from the intralogistics transport system (30) into which it can be retrofitted.

3. Module according to claim 1 or 2,
**characterized in that** the energy storage device (3) is formed separately from the voltage source (32) of the intralogistics transport system (30) into which the module (1) can be retrofitted.

4. Module according to one of the claims 1 to 3,
**characterized in that** the energy storage device (3) is a capacitor, particularly a high voltage capacitor, a super cap or a rechargeable battery.

5. Module according to one of the claims 1 to 4,
**characterized in that** the DC electric motor (31) of the intralogistics system (30) is used to drive a conveyor belt.

6. Module according to one of the claims 1 to 5,
**characterized in that** the control unit (4) is designed to receive an input signal, wherein the control unit (4) decides based on the input signal whether the DC electric motor (31) is consuming or generating electrical energy.

7. Module according to claim 6,
**characterized in that** the control unit (4) decides whether the DC electric motor (31) is consuming or generating electrical energy by comparison of the input signal to a threshold value.

8. Module according to claim 6 or 7,
**characterized in that** the input signal is a voltage measured by the module in an electrical connection line between the voltage source (32) of the intralogistics transport system (30) and the DC electric motor (31) of the intralogistics transport system (30).

9. Module according to claim 7 and claim 8,
**characterized in that** the control unit (4) decides that the DC electric motor (31) is generating electrical energy if the voltage measured by the module (1) in the electrical connection line exceeds the threshold value, wherein the threshold value is a voltage threshold value (Uo).

10. Module according to claim 9 or according to claim 7 and claim 8,
**characterized in that** the control unit (4) allows energy supply to the intralogistics transport system (30) from the energy storage device (3) via the DC/DC converter (2) if the voltage measured by the module (1) in the electrical connection line falls beyond the threshold value, wherein the threshold value is a voltage threshold value (Uo).

11. Module according to claim 6 or 7,
**characterized in that** the input signal is an electrical current measured by the module (1) in an electrical connection line between the voltage source (32) of the intralogistics transport system (30) and the DC electric motor (31) of the intralogistics transport system (30).

12. Module according to claim 11,
**characterized in that** the control unit (4) decides that the DC electric motor (31) is generating electrical energy if the current measured by the module (1) in the electrical connection line flows in the direction from the DC electric motor (31) of the intralogistics transport system (30) to the voltage source (32) of the intralogistics transport system (30).

13. Module according to claim 11 or 12,
**characterized in that** the control unit (4) decides that the DC electric motor (31) is consuming electrical energy if the current measured by the module (1) in the electrical connection line flows in the direction from the voltage source (32) of the intralogistics transport system (30) to the DC electric motor (31) of the intralogistics transport system (30).

14. Module according to one of the claims 1 to 13,
**characterized in that** the module (1) comprises an input terminal (5) and an output terminal (6), wherein the input terminal (5) of the module (1) is provided for connection with the voltage source (32) of the intralogistics transport system (30), wherein the output terminal (6) is provided for connection with the DC electric motor (31) of the intralogistics transport system (30).

15. Module according to claim 14,
**characterized in that** the module (1) comprises an electrical wire (7) connecting the input terminal (5) electrical with the output terminal (6) such that the electrical wire (7) can be part of the electrical connection between the voltage source (32) of the intralogistics transport system (30) and the DC electric motor (31) of the intralogistics transport system (30).
